# EUROPÄISCHE PATENTSCHRIFT

(11) **EP 3 166 409 B1**
(45) Veröffentlichungstag und Bekanntmachung des Hinweises auf die Patenterteilung: **11.09.2019**
(21) Anmeldenummer: 15742189.2
(22) Anmeldetag: 02.07.2015
(51) Int. Cl.: A21B 7/00, A21D 8/02

(54) **MULTIVARIABLES BACKVERFAHREN UND VORRICHTUNG DAFÜR**
MULTIVARIABLE BAKING METHOD AND DEVICE THEREFOR
PROCÉDÉ DE CUISSON MULTIVARIABLE ET DISPOSITIF ASSOCIÉ

(30) Priorität: 10.07.2014 DE 102014213450
(43) Veröffentlichungstag der Anmeldung: 17.05.2017
(73) Patentinhaber: Kuchenmeister GmbH, 59494 Soest (DE)
(72) Erfinder: TROCKELS, Hans-Günter, 59494 Soest (DE); JANK, Rüdiger, 16548 Glienicke (DE); NASSE, Bernd, 59514 Welver (DE)
(74) Vertreter: Maikowski & Ninnemann Patentanwälte Partnerschaft mbB
(86) Internationale Anmeldenummer: PCT/EP2015/065105
(87) Internationale Veröffentlichungsnummer: WO 2016/005264

(56) Entgegenhaltungen:
- GB-A- 2 274 768
- IE-B2- S64 448
- US-A- 5 853 783
- US-A1- 2003 003 211
- US-A1- 2004 076 725
- US-A1- 2005 249 845
- Anonymous: "Pan bread lines | WP Industrial Bakery Technologies", Werner & Pfleiderer Industriele Backtechnik GmbH (archived by Waybackmachine) , 4. Juli 2014 (2014-07-04), XP002744882, Gefunden im Internet: URL:http://web.archive.org/web/20140704064 746/http://www.wpib.de/en/world-of-product s/pan-bread-lines.html [gefunden am 2015-09-23]

## Beschreibung

Die vorliegende Erfindung betrifft ein multivariables Verfahren zur kontinuierlichen Herstellung von Backwaren, insbesondere von Backwaren aus biologisch gelockerten Weizenteigen, gemäß Anspruch 1 und eine Vorrichtung zur Durchführung dieses Verfahrens gemäß Anspruch 15.

### Beschreibung

Backwaren aus biologisch gelockerten Weizenteigen sind Produkte, die durch alkoholische Gärung und Fermentation von Hefe und/oder Sauerteig und dem während der Gärung sich bildenden Gases (Lockerungsgas) erzeugt werden. Biologisch gelockerte Weizenteige werden weltweit zu Brot, wie z. B. Toastbrot, Weizenkastenbrot, Sandwich, und Weizenkleingebäck, wie Brötchen, Milchbrötchen, Brioches, Kipfel usw., hergestellt. Abhängig von der Produktionsstruktur und der Brotsorte werden Backwaren aus biologisch gelockerten Weizenteigen nach getrennten technologischen Verfahren hergestellt. Neben der traditional handwerklichen Herstellung setzte sich in den letzten drei Jahrzehnten die industrielle Herstellung durch und verdrängte die handwerkliche Produktion zunehmend. Das betrifft insbesondere die Herstellung von Toastbroten, Sandwichbrot und Milchbrötchen.

Die industrielle Herstellung dieser Backwaren erfolgt nach unterschiedlichen Verfahren. So wird die Teigherstellung für Toastbrote und Sandwichbrot batchweise in Knetern durchgeführt. Im Falle von Toastbrot und Sandwichbrot werden vielfach Intensivkneter verwendet, um das typische feine Porenbild dieser Brotsorten zu erreichen. Zudem wird die Teigherstellung teilweise unter wechselndem atmosphärischem Druck vorgenommen. Die Verwendung von kontinuierlichen Knetern ist aufgrund der gewünschten Qualitätseigenschaften selten.

Im Anschluss zum Knetvorgang wird der Teig für Toastbrote oder Sandwichbrote maschinell portioniert, mit Wirkmaschinen geformt und einen zweistufigen Gärprozess unterzogen. Die erste, kürzere Gärphase dient der Teigentspannung. In dieser Phase entspannt sich das durch den Wirkprozess strukturierte Proteinnetz des Teiges und reduziert seine elastischen Eigenschaften.

Nach der ersten Gärphase werden die runden Teigstücke länglich verformt und gegebenenfalls in vier Teile geschnitten. Die vier geteilten Teigstücke sind an ihren Schnittflächen teilweise verbunden. Ein kontrolliertes und definiertes Ablegen der Teigstücke in Formen ist dadurch nicht möglich und willkürlich. Nach dem Ablegen der Teiglinge in Formen bzw. Formverbänden erfolgt der Nachgärprozess. Während des Nachgärprozesses wird durch alkoholische Gärung das Lockerungsgas gebildet, welches in erster Linie aus Kohlendioxid und Alkohol besteht.

Ein weiteres Verfahren zur Brotherstellung ist das kontinuierliche Ausrollverfahren, bei welchem die endlosen Teigbänder eingerollt, geschnitten und in Formverbände abgelegt werden.

Nach dem Gärprozess werden die Formen zum Ofen transportiert. Die Formverbände werden vor dem Einschieben in den Backofen unter Verwendung von mechanischen Vorrichtungen mit Deckeln geschlossen und mechanisch in den Backofen eingeschoben. Als Öfen werden vielfach Durchlauf- oder Tunnelöfen verwendet. Die Entfernung der Backformen aus dem Ofen und die Entleerung des Ofens nach Ende des Backprozesses erfolgt in typischer Weise ebenfalls unter Verwendung von mechanischen Vorrichtungen. Bei einem Sortenwechsel, d. h. z. B. Toastbrot zu Milchbrötchen oder Toastbrot zu Sandwichbrot, der typischerweise mit einem Wechsel der Backformen verbunden ist, werden die jeweilig verwendeten Backformen durch aufwendige Transportsysteme zu den Depots transportiert und dort gelagert.

Die Teigherstellung von Weizenkleingebäcken nach industriellem Maßstab erfolgt ebenfalls unter Verwendung von Knetsystemen, wobei die verwendeten Kneter chargenweise oder auch kontinuierlich arbeiten. Bei industriell hergestellten Milchbrötchen wird nach der Teigzubereitung der Teig in Teil- und Wirkmaschinen portioniert und rundgeformt. Nach einer kurzen Entspannungsphase, die sich in einem Transportsystem vollzieht, werden die Teiglinge langgerollt und auf Bleche bzw. in Formen abgelegt. Anschließend erfolgt der Backprozess in Durchlauföfen, wobei die Ofenbeschickung und Entleerung ebenfalls mit mechanischem System durchgeführt wird. Die mechanischen Systeme bestehen aus Transportbändern und Mitnehmern, die die Formverbände führen. Das Schneiden der Teiglinge an der Teigoberfläche erfolgt durch mechanische Schneideanlagen vor oder nach dem Gärprozess.

Typisch für die industrielle Fertigung nach dem bisherigen Stand der Technik ist eine technologische Trennung der Backvorgänge und Produktionsanlagen zwischen Kleingebäck, wie Brötchen und Milchbrötchen, und Großgebäck, wie Toastbrot und Sandwichbrot. Diese technologische Trennung der verschiedenen Gebäckarten ist jedoch ungünstig und unökonomisch.

Entsprechend bestand eine Aufgabe der vorliegenden Erfindung darin, ein Verfahren bereitzustellen, welches die Herstellung von Großgebäck und Kleingebäck in einer Fertigungslinie ermöglicht.

Diese Aufgabe wird erfindungsgemäß mit einem Verfahren mit den Merkmalen des Anspruchs 1 gelöst.

Entsprechend wird ein multivariables Verfahren zur kontinuierlichen Herstellung von Backwaren, insbesondere von Backwaren aus biologisch gelockerten Weizenteigen, bereitgestellt, welches die folgenden Schritte umfasst:
a) Herstellen einer ersten Teigphase aus teigbildenden Rohstoffen bei einer Temperatur zwischen 20 und 30°C in mindestens einer ersten kontinuierlichen Knetvorrichtung, bevorzugt in einer Schnecke, ,
b) Auftragen der ersten Teigphase auf ein erstes Transportband zur Entspannung des Teiges,
c) Eintragen der entspannten ersten Teigphase in mindestens eine zweite kontinuierliche Knetvorrichtung, bevorzugt in eine Schnecke, und Herstellen einer zweiten Teigphase unter Zuführung von teigbelastenden Rohstoffen, bei einer Temperatur zwischen 25 und 35°C,
d) Aufbringen der zweiten Teigphase aus der zweiten Knetvorrichtung auf ein zweites Transportband,
e) Überführen des Teiges von dem zweiten Transportband über mindestens einen Teigbandformer unter Ausbildung eines Teigbandes auf ein drittes Transportband mit mindestens einer ersten Walzvorrichtung, wobei das Teigband in der mindestens einen ersten Walzvorrichtung auf eine Dicke von 3 bis 50 mm geschert wird, und Überführen des gewalzten Teigbandes auf ein viertes Transportband zum Entspannen,
f) Falten des gewalzten entspannten Teigbandes,
g) Einführen des gefalteten Teigbandes in mindestens eine zweite Walzvorrichtung, wobei das gefaltete Teigband in der mindestens einen zweiten Walzvorrichtug auf eine Teigbandstärke von 2 bis 20 mm geschert wird,
h) Schneiden des Teigbandes in eine vorbestimmte Anzahl von Teiglingen,
i) Bestücken von quadratischen Backformen oder quadratischen Backblechen mit vorgegebenen konstanten Abmessungen mit den Teiglingen,
j) Gärung der Teiglinge in den offenen Backformen,
k) optional automatisiertes Abdecken der mit den gegärten Teiglingen bestückten Backformen,
l) Backen der Teiglinge in den Backformen, wobei der zum Backen verwendete Backofen über mehrere Backzonen mit mindestens vier Wärmeübertragungsvarianten, insbesondere Leitung, Konvektion, Strahlung und Kondensation, verfügt und mit unterschiedlichen Auslastungsgraden betrieben wird,
m) optional automatisiertes Entfernen der Abdeckung der Backformen,
n) automatisierte Entnahme der gebackenen Backware aus der Backform und Kühlen der Backware, und
o) Kühlen der Backformen nach Entnahme der gebackenen Backware, insbesondere unter Verwendung eines Wasserstrahls.

Das vorliegende Verfahren ermöglicht die Verwendung einer Fertigungslinie zur Herstellung von Backwaren, insbesondere aus Weizenteigen unterschiedlicher Größe und Form in einer Fertigungslinie. Das vorliegende Verfahren weist Redundanzen auf, die einen Austausch von Produkten zwischen den Backlinien ermöglicht. Das Verfahren ist nach dem Prinzip eines Baukastensystems aufgebaut, wodurch eine multivariable Betriebsgestaltung erreicht wird.

Durch die Verwendung der kontinuierlichen Teigkneter mit zwei getrennten Teigtrögen, die durch ein Entspannungsband verbunden sind, ist es nunmehr möglich den Energieeintrag in Abhängigkeit der Rezeptur und der gewünschten Gebäckstruktur zu steuern. Die gewünschte Feinporigkeit der Backwaren wird durch die mechanische Scherung des Teiges während des Ausrollprozesses und des Faltprozesses des ausgerollten Teigbandes und wiederholtem Scheren durch Walzwerke erreicht. Dadurch werden die Vorteile eines Intensivkneters, insbesondere im Hinblick auf die Feinporigkeit kompensiert.

Durch die vorliegende Kombination von verschiedenen Scherkräften und Scherintensitäten in den Knetvorrichtungen und dem damit verbundenen Energieeintrag während des Knetprozesses sowie dem anschließenden Entspannungsverfahren können verschiedene Teig- und Gebäckstrukturen hergestellt werden. Insbesondere durch die vorliegende Anordnung von Walzen- und Faltsystem mit den damit verbundenen variablen Scherkräften können unterschiedliche Teigstrukturen in einer Fertigungslinie hergestellt werden.

In einer ersten Ausführungsform des vorliegenden Verfahrens werden zur Bildung des ersten Teiges bzw. der ersten Teigphase in der ersten Knetvorrichtung teigbildende Rohstoffe in die erste Knetvorrichtung eingeführt. Teigbildende Rohstoffe umfassen hierbei insbesondere Wasser, Sauerteig und Trockensubstanz, wie Mehl, Emulgatoren und ggf. geringe Mengen an Zucker. Die verwendete Knetvorrichtung kann, wie bereits erwähnt, in Form einer Schnecke bzw. eines Schneckenkneters ausgebildet sein.

Das Kneten in der ersten Knetvorrichtung, die bevorzugt in Form einer ersten Schnecke ausgebildet ist, erfolgt bei einer Temperatur zwischen 20 bis 30 °C, bevorzugt 22 bis 29 °C, insbesondere bevorzugt zwischen 24 bis 26 °C.

Nach Abschluss der Bildung des ersten Teigphase in der ersten Knetvorrichtung wird die Teigphase erfindungsgemäß auf ein Transportband aufgetragen bzw. übertragen, wobei eine Entspannung der ersten Teigphase auf dem Transport- (bzw. Entspannungs-) Band über einen Zeitraum von 10 Sekunden bis 10 Minuten, bevorzugt von 30 Sekunden bis 5 Minuten in Abhängigkeit des hergestellten Teiges, stattfindet.

Erfindungsgemäß werden in die mindestens eine zweite Knetvorrichtung, z.B. Kneter, teigbelastende Rohstoffe in die zweite Teigphase zugeführt. Unter teigbelastenden Rohstoffen werden vorliegend insbesondere Fette, Öle, Aromastoffe, Zucker, Glycerin und Ähnliches verstanden. Das Kneten in der zweiten Knetvorrichtung, die ebenfalls insbesondere in Form einer Schnecke vorliegt, kann auch als Nachkneten angesehen werden.

Die Teigtemperatur in der zweiten Knetvorrichtung liegt in einem Temperaturbereich zwischen 25 und 35 °C, bevorzugt zwischen 27 und 30 °C, ganz besonders bevorzugt bei 29 °C, jeweils in Abhängigkeit des herzustellenden Teiges.

Der Durchsatz des zweiten Kneters bzw. der zweiten Knetvorrichtung wird durch die Einstellung der Drehzahl bestimmt. Dabei ergeben unterschiedliche Knetintensitäten unterschiedliche Gebäckstrukturen. Auch können sich die Leistung der ersten Knetvorrichtung und der zweiten Knetvorrichtung voneinander unterscheiden, um die gewünschten Teigstrukturen zu erhalten. So kann die Leistung des ersten Kneters in einem Bereich zwischen 40 und 50 Hz liegen, während die Leistung des zweiten Kneters in einem Bereich zwischen 30 und 40 Hz, bevorzugt zwischen 35 und 40 Hz je nach Gebäckstruktur liegt. Der erste und der zweite Kneter können dabei bevorzugt vertikal zueinander angeordnet sein, wodurch eine platzsparende Anordnung ermöglicht wird.

Wie oben ausgeführt, wird die Teigphase aus dem zweiten Kneter bzw. aus der zweiten Knetvorrichtung auf ein zweites Transportband unter Ausbildung eines Teigbandes aufgebracht (siehe Schritt d). Von dem zweiten Transportband gelangt das inhomogene Teigband in mindestens einen Teigbandformer, der in Form einer Trichtervorrichtung ausgebildet ist und an bzw. unterhalb der Trichteröffnung über mindestens ein Walzenpaar, bevorzugt zwei oder drei Walzenpaare verfügt. Die Teigmasse wird durch den Trichter und das mindestens eine Walzenpaar senkrecht bzw. vertikal als homogen geformtes Teigband auf ein drittes, horizontal laufendes Transportband abgelegt.

An diesem dritten Transportband ist mindestens eine erste Walzvorrichtung vorgesehen. Die Walzvorrichtung umfasst bevorzugt ein Walzwerk mit oben- und untenliegender motorisch betriebener Walze. Es ist auch möglich ein Walzwerk mit mehreren auf einer kreisförmigen oder elliptischen Bahn laufenden Walzen einzusetzen.

In dieser mindestens einen ersten Walzvorrichtung wird das Teigband auf eine Dicke von 3 bis 50 mm, bevorzugt 10 bis 40 mm, insbesondere 20 bis 35 mm gewalzt bzw. geschert. Die Teigstärke des Teigbandes nach Verlassen der Walzvorrichtung wird insbesondere durch das gewünschte Endprodukt bestimmt. So liegt die Teigstärke bzw. Teigdicke des Teigbandes nach der ersten Walzvorrichtung im Falle der Herstellung von Toastbrot bei ungefähr 6 mm, bei Milchbrötchen bei ca. 4 mm und bei Ciabattabrötchen bei ungefähr 10 mm.

Das gewalzte Teigband wird anschließend auf ein viertes Transportband zum weiteren Entspannen überführt.

In dem sich anschließenden Schritt f) des Faltens des entspannten Teigbandes wird das entspannte Teigband von dem vierten Transportband auf ein fünftes Transportband aufgebracht. Je nach gewünschter Art der herzustellenden Backware gibt es verschiedene Möglichkeiten des Faltens des entspannten Teigbandes.

So kann in einer ersten Variante i) des Faltprozesses das Teigband zum Falten auf das vertikal oder rechtwinklig zum vierten Transportband angeordnete fünfte Transportband aufgebracht werden. Hierbei kann beim Übergang des Teigbandes von dem vierten Transportband auf das fünfte Transportband das Teigband quer zur Laufrichtung des fünften Transportbandes gefaltet werden. Dies kann z. B. durch ein rechtwinkliges mehrschichtiges Ablegen des Teigbandes erfolgen. Das Teigband wird mit einer sehr geringen Fallhöhe dabei übereinandergelegt oder laminiert, um die Bearbeitung mit Hand zu simulieren und dabei die Stabilität der Teigstruktur zu erhöhen.

In einer weiteren zweiten Faltungsvariante ii) kann das Teigband parallel zur Laufrichtung des Transportbandes entlang seiner Längsachse gefaltet werden. Entsprechend wird in dieser Variante das Teigband in Laufrichtung eingefaltet, wobei die Seitenränder des Teigbandes jeweils von rechts oder links um 180 ° zur Mittelachse umgeschlagen bzw. eingefaltet werden. Durch eine Faltung des Teigbandes erhöht sich die Teigbandstärke um das 10- bis 30-Fache.

Erfindungsgemäß wird das gefaltete Teigband in mindestens einer zweiten Walzvorrichtung in Schritt g) auf eine abschließende Teigstärke bzw. Teigbanddicke von 2 bis 20 mm, bevorzugt 2 bis 10 mm gewalzt bzw. geschert. Dabei ist die in der zweiten Walzvorrichtung einzustellende Teigdicke wiederum abhängig von der Art der gewünschten Backform. Die abschließende Teigstärke kann z. B. für ein Toastbrot bei 3 mm liegen, für ein Milchbrötchen bei 2 mm und im Falle von Ciabattabrötchen bei 5 mm.

Die zweite Walzvorrichtung ist insbesondere in Form eines Quickreduktors mit Schlichtwerk (Kalibrierkopf mit Walzentrommel) ausgebildet, wobei mehrere z.B. drei Schlichtwerke hintereinander angeordnet sein können. Auch ist die Anwendung eines Mehrwalzensystems möglich.

Die Teigbänder weisen nach dem zweiten Walzvorgang typischerweise eine Breite zwischen 300 bis 600 mm auf.

Nach dem Falten und erneutem Walzen des Teigbandes wird dieses unter Verwendung einer Schneidvorrichtung in Schritt h) in eine vorbestimmte Anzahl von Teiglingen in Längs- und Querrichtung geschnitten. Das Schneiden des Teigbandes erfolgt bevorzugt unter Verwendung einer Schneidwalze und/oder Guillotine.

Eine Separierung bzw. Auftrennung der geschnittenen Teigstücke oder Teiglinge wird bevorzugt durch unterschiedliche Bandgeschwindigkeiten der verwendeten Transportbänder bewirkt, wobei durch das Auftrennen der geschnittenen Teigbänder in die Einzelstücke mit unterschiedlicher Größe die unterschiedlichen finalen Gebäckgrößen bestimmt werden.

Während des Schneidprozesses erfolgt zunächst ein Schneiden der Teigbänder in Längsrichtung, und anschließend in Querrichtung. Dabei werden die längsgeschnittenen Teigbänder abgewogen und je nach gewünschtem Produkt erfolgt dann der Querschnitt des abgewogenen Teigbandes, so dass ein definiertes Gewicht des gewünschten Backproduktes an dieser Position erzielt wird.

Nach dem Schritt des Schneidens der Teigbänder in eine vorbestimmte Anzahl von Teiglingen werden die geschnittenen Teiglinge in Laufrichtung zu ihrer Querachse eingerollt und die eingerollten Teiglinge in die vorbestimmte Form, z. B. in Wirkkanälen gebracht. Das Aufrollen der Teiglinge kann z.B. durch den Einsatz von Schleppnetzen vorgenommen werden. Nach dem Aufrollen erfolgt bevorzugterweise eine Verdichtung der Rollen unter Verwendung eines Druckbandes.

Die im Schritt des Einrollens der Teiglinge und der Formgebung der Teiglinge verwendeten Module, wie Führungsschienen und Einrollvorrichtungen, sind austauschbar, so dass eine einfache Anpassung des Herstellungsverfahrens an die gewünschte Backware leicht möglich ist.

Im weiteren Verlauf des Verfahrens werden die geschnittenen und eingerollten Teiglinge in Schritt i) auf Backformen oder Backblechen abgesetzt. Die zum Einsatz kommenden Backformen weisen bevorzugt ein konstantes Verhältnis der Seitenflächen zueinander auf, d. h. die Backformen sind mit einem vorgegebenen Modulmaß, z. B. 1100 x 1100 mm, vorgegeben und können insbesondere eine quadratische Form aufweisen. Das konstante Verhältnis der Seitenflächen und das vorgegebene Modulmaß ermöglichen den Transport, Beladung und Entladung der Backformen mit den gleichen Systemen. Besonders bevorzugt ist die Verwendung eines Backbleches mit einer Fläche von mindestens einem Quadratmeter, um einen ruhigen Ablauf mit geringen Taktzahlen zu ermöglichen. Auch ist die Fläche des Backbleches bevorzugt quadratisch, so dass eine einfache Steuerung des Transportes ermöglicht wird. Zudem ermöglicht eine quadratische Fläche des Backbleches eine prozessabhängige Drehung der Backblechformen bzw. des Backbleches unter Nutzung standardisierter, austauschbarer Transportstrecken.

Nach Einbringen der Teiglinge in die Backformen erfolgt die Gärung der Teiglinge in der offenen Backform in einem einzigen Schritt j), so dass die Trennung in ein Vor- und Nachgärsystem entfällt. Die Gärtemperatur der Teiglinge in der offenen Backform kann zwischen 30 und 35 °C, bevorzugt zwischen 32 und 34 °C betragen, wobei eine Gärzeit zwischen 30 und 120 min., bevorzugt 45 und 115 min., insbesondere bevorzugt zwischen 50 und 100 min liegt.

Die relative Luftfeuchte kann während der Gärung in der offenen Backform zwischen 75 und 95 %, bevorzugt zwischen 80 und 90 %, insbesondere bevorzugt zwischen 85 und 88 % betragen.

Gärtemperatur, Gärzeit und relative Luftfeuchte während des Gärungsprozesses sind insbesondere abhängig von der Teigzusammensetzung; z. B. erfordert ein Teig für Toastbrot eine Gärzeit von 57 min bei einer Gärtemperatur von 34 °C und einer relativen Luftfeuchte von 85 %; ein Teig für Milchbrötchen erfordert eine Gärzeit von 115 min bei einer Gärtemperatur von 32 °C und einer relativen Luftfeuchte von 80 % und ein Teig für Ciabattabrötchen erfordert eine Gärzeit von 45 min bei einer Gärtemperatur von 32 °C und einer relativen Luftfeuchte von 88 %.

Wie oben erwähnt, kann der Schritt k) des Abdeckens der mit den gegärten Teiglingen bestückten Backformen automatisiert erfolgen. In einer Ausführungsform erfolgt das automatisierte Abdecken der mit den gegärten Teiglingen bestückten Backformen bzw. Backbleche unter Verwendung eines Roboters. Der verwendete Roboter kann über ein Kamerasystem verfügen, das die korrekte Positionierung der Abdeckungen bzw. Deckel auf den Backformen kontrolliert. Damit entfallen aufwendige mechanische Vorrichtungen.

Das Backen der Teiglinge in Schritt l) kann in den Backformen bei Temperaturen zwischen 150 und 250 °C, bevorzugt zwischen 180 und 240 °C, insbesondere bevorzugt zwischen 200 und 220 °C erfolgen. Bevorzugterweise weist der zum Einsatz kommende Backofen eine während des Durchlaufs der Teiglinge durch den Ofen graduell abnehmende Ofentemperatur auf. So kann die Ofentemperatur am Beginn (d. h. Eintritt der ungebackenen Teiglinge in den Ofen) zwischen 200 und 240 °C betragen und am Ende der Backzone (d. h. Austritt der gebackenen Teiglinge aus dem Ofen) zwischen 180 und 200 °C betragen.

In einer Ausführungsform des Schrittes l) beträgt die Backzeit zwischen 5 und 35 min, bevorzugt zwischen 6 und 30 min, insbesondere bevorzugt zwischen 8 und 28 min, ganz besonders bevorzugt zwischen 10 und 26 min in Abhängigkeit des zu backenden Teiges und/oder Teiggewichtes.

Auch wird in einer Ausführungsvariante des vorliegenden Verfahrens eine Konvektion im Backofen in Abhängigkeit des zu backenden Produktes eingesetzt. So können bei bestimmten Backwaren eine vertikale Konvektion von der Ofenunterseite und/oder eine horizontale Konvektion auf die Oberfläche der zu backenden Teiglinge überhaupt nicht, nur zu Beginn der Backzeit oder während der gesamten Backzeit wünschenswert sein. Auch ist es möglich, eine eingeschränkte Konvektion von z. B. 20 bis 80 %, bevorzugt 40 bis 60 % einzusetzen. Insbesondere ist es bevorzugt, eine Konvektion von 30 bis 60 % zu Beginn der Backzeit anzuwenden.

Insgesamt stehen erfindungsgemäß im vorliegenden Verfahren im Backprozess vier Möglichkeiten der Wärmeübertragung zur Verfügung: Leitung, Konvektion, Strahlung und/oder Kondensation. Der Backofen weist bevorzugt mehrere verschiedene Backzonen, z.B. bis zu zwölf verschiedene Backzonen auf. Die Strömungsrichtung der Wärmeluft in den Backzonen ist bevorzugt so gestaltet, dass diese gegenläufig zueinander ist bzw. gegenüberliegend zueinander ist. Dies verhindert bzw. begrenzt einen Eintrag an Außenluft in den Backofen.

Der Backprozess kann je nach Gebäckart unter 100 % Auslastung der Backfläche oder unter weniger als bis zu 50 % unterhalb der Kapazität des Backofens liegende Auslastung ablaufen, d.h. der Backofen kann mit unterschiedlichen Auslastungsgraden betrieben werden. Um eine gleichmäßige Übertragung der Energie zu ermöglichen, wird eine entsprechende Steuerung der Wärmeübertragung genutzt. Als Energieträger wird vorzugsweise Thermoöl verwendet, das eine exaktere Lückenabsenkung ermöglicht. Durch die wahlweise Zuschaltung von vertikalen und horizontalen Turbulenzen kann mittels der bereits erwähnten Konvektion der Energieeintrag poduktspezifisch exakt geregelt werden. Ein wesentlicher Vorteil des vorliegenden Verfahrens besteht darin, dass die üblicherweise notwendige Verwendung von zwei unterschiedlichen Öfen bei Verwendung von unterschiedlichen Backwarenteigen entfällt.

An den Backprozess kann sich in Schritt m) das automatisierte Entfernen der Abdeckung bzw. der Deckel der Backformen anschließen. Nach Entfernung der Abdeckung der Backformen erfolgt eine automatisierte Entnahme der gebackenen Backware aus der Backform in Schritt h) und die Kühlung der Backwaren. In einer Variante des vorliegenden Verfahrens werden die Schritte des automatisierten Entfernens der Abdeckung der abgedeckten Backformen und/ oder der automatisierten Entnahme der gebackenen Backware aus der Backform jeweils mittels eines Roboters vorgenommen. Entsprechend werden die Formen durch jeweils einen Roboter nach dem Backprozess entdeckelt und durch einen zweiten Roboter entleert. Bei Kleingebäcken mit niedrigeren Backzeiten und höheren Taktzahlen und Backwaren, die ohne Abdeckung gebacken werden, können die zwei genannten Roboter vorteilhafterweise die gleiche Funktion ausführen. Auch kann bei Ausfall eines Roboters der parallele Roboter als redundantes System dienen.

Nach Entnahme der gebackenen Backware aus der Backform erfolgt in Schritt o) die Kühlung der Backformen, wobei diese unter Verwendung eines Wasserstrahls vorgenommen wird. Hierbei werden die Temperaturen der Backformen auf Temperaturen zwischen 20 und 30 °C, bevorzugt 25 und 30 °C gekühlt. Die Verwendung eines Wasserstrahls hat sich als energetisch günstig erwiesen, da kein hoher Energieeintrag, wie durch die konventionell verwendeten Lüfter oder andere Kühlmittel erforderlich ist. Die verwendete Wassermenge des Wasserstrahls wird dabei so gewählt, dass das Wasser vollständig verdampft. Die zur gewünschten Kühlung erforderliche Wassermenge kann zwischen 100 und 400 g pro Backform, bevorzugt zwischen 150 und 350 g pro Backform, insbesondere bevorzugt zwischen 200 und 300 g pro Backform liegen. Die erforderliche Wassermenge ist dabei abhängig von der Größe der Backform und der Art der gebackenen Backware und wird nach Formengewicht und der erforderlichen Temperaturdifferenz berechnet. Die erforderliche Wassermenge beträgt z. B. bei einer 1070 x 1070 mm Backform für Toastbrot zwischen 200 und 220 g, bei Milchbrötchen zwischen 350 und 380 g pro Backform und bei Ciabattabrötchen zwischen 150 und 170 g pro Backform.

In einer weiteren Variante des vorliegenden Verfahrens werden die Backformen im Falle eines Produktwechsels auf einer Arbeitsbühne gelagert. Der Lagerraum ist dabei bevorzugt staubgeschützt über den Backöfen angeordnet. Der Transport und die Stapelung der Backformen erfolgt bevorzugt ebenfalls automatisiert z. B. durch einen Portalroboter. Die Backformenverbände und die Deckel können ein spezifisches Selbststapelsystem aufweisen, welches es den Robotern ermöglicht, die Backformen aufzunehmen und frei gestapelt zu lagern. Die Fixierung der Backformenstapel erfolgt unter Verwendung von Stapeldornen; Regalsysteme sind somit nicht länger erforderlich.

Das vorliegende Verfahren kennzeichnet sich insbesondere durch seine Variabilität und Flexibilität aus. So können mit dem vorliegenden variablen System unterschiedliche Produkte mit variablen Prozessstufen und variierenden technologischen Bausteinen (Modulen) hergestellt werden.

Auch erlaubt das vorliegende System und Verfahren eine Kopplung der Module des Backsystems mit einem zweiten parallelen (Schwester)System, wodurch ein redundantes Fabriksystem entsteht.

Gegenstand der vorliegenden Erfindung ist ebenfalls eine Vorrichtung zur kontinuierlichen Herstellung von Backwaren in einem oben beschriebenen Verfahren.

Entsprechend umfasst die vorliegende Vorrichtung
- mindestens eine erste Knetvorrichtung und mindestens eine zweite Knetvorrichtung, die über ein erstes Transportband miteinander verbunden sind,
- mindestens ein zweites Transportband zum Überführen des aus der zweiten Knetvorrichtung austretenden Teigbandes in eine mindestens eine Trichtervorrichtung auf mindestens ein drittes Transportband,
- mindestens eine an dem dritten Transportband vorgesehene erste Walzvorrichtung,
- mindestens ein viertes Transportband zum Überführen des in der ersten Walzvorrichtung gewalzten Teigbandes auf mindestens ein fünftes Transportband, wobei das gewalzte Teigband gefaltet wird
- mindestens eine zweite Walzvorrichtung zum Walzen des auf dem fünften Transportband vorliegenden gefalteten Teigbandes;
- mindestens eine Schneidvorrichtung zum Schneiden des Teigbandes in eine vorbestimmte Anzahl von Teiglingen,
- mindestens eine Vorrichtung zum Bestücken der quadratischen Backformen oder Backbleche mit den geschnittenen Teiglingen,
- mindestens einen ersten Roboter zum Abdecken der mit den gegärten Teiglingen bestückten Backformen,
- mindestens einen Backofen zum Backen der Teiglinge in den Backformen, wobei der Backofen über mehrere Backzonen mit mindestens vier Wärmeübertragungsvarianten, insbesondere Leitung, Konvektion, Strahlung und Kondensation, verfügt und mit unterschiedlichen Auslastungsgraden betrieben wird;
- mindestens einen zweiten Roboter zum Entfernen der Abdeckung der Backformen,
- mindestens einen dritten Roboter zur Entnahme der Backwaren aus den Backformen,
- mindestens eine erste Kühlvorrichtung, in Form von mindesten einem Wasserstrahls oder Wasserschleiers, zum Kühlen der Backformen nach Entnahme der gebackenen Backware, und
- mindestens eine zweite Kühlvorrichtung, bevorzugt Kühltürme oder Bänder zum Kühlen der Backwaren.

Die Temperatur der abgekühlten Backware vor der Verpackung liegt zwischen 25°C und 37 °C, bevorzugt zwischen 27°C und 33°C, insbesondere bevorzugt zwischen 28°C und 30°C.

Hinsichtlich der Einzelheiten der singulären Vorrichtungsbestandteile wird auf die entsprechende Beschreibung der Verfahrensschritte verwiesen.

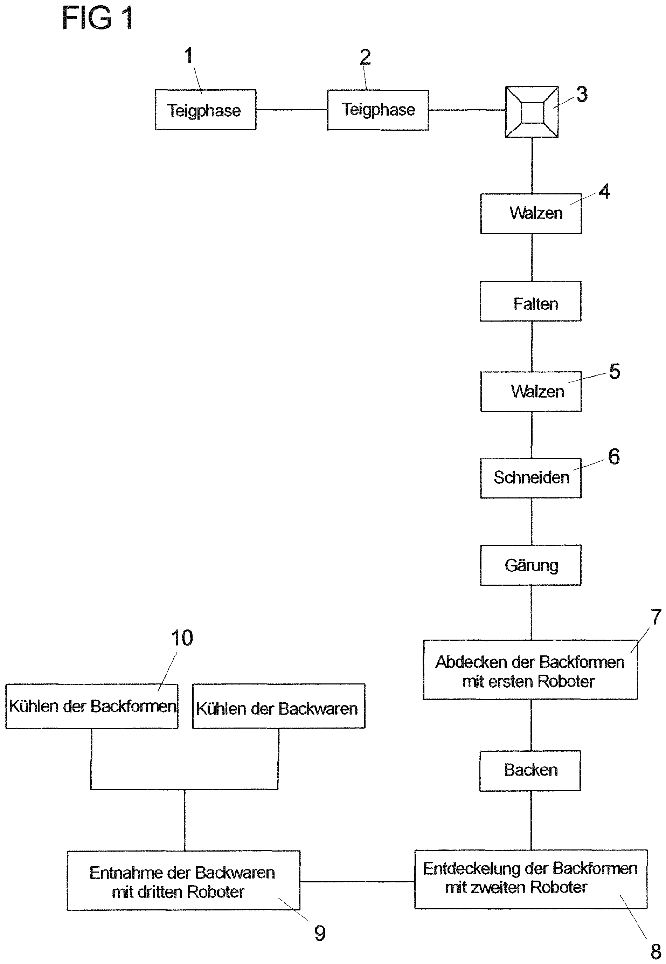

Die vorliegende Erfindung wird nachfolgend unter Bezugnahme auf die Figur 1 an mehreren Ausführungsbeispielen näher erläutert. Es zeigt:
- Fig. 1: eine schematische Darstellung einer Ausführungsform des erfindungsgemäßen Verfahrens.

Figur 1 zeigt eine schematische Übersicht einer Ausführungsform des vorliegenden Verfahrens, wobei in einem ersten Kneter 1, z.B. einer ersten Knetschnecke eine erste Teigphase aus teigbildenden Rohstoffen, wie Weizenmehl, Wasser und/oder Sauerteig hergestellt wird. Nach einem vorbestimmten Zeitraum und Energieeintrag des Knetens, der in Abhängigkeit der gewünschten Backware variieren kann, wird die erste Teigphase aus dem ersten Kneter 1 auf ein erstes Transportband zur Entspannung abgelegt. Der Teig verbleibt auf dem Transportband oder Entspannungsband für einen Zeitraum von z. B. 30 s., bevor dieser in den zweiten Kneter 2 eingeführt wird. In dem zweiten Kneter 2 erfolgt ein Nachkneten des Teiges unter Zugabe von teigbelastenden Rohstoffen, insbesondere von Fett und anderen Zuckerstoffen und Zuckeralkoholen.

Nach Aufbringen der zweiten Teigphase aus dem Kneter 2 auf ein zweites Transportband unter Ausbildung eines zweiten Teigbandes wird dieses von dem zweiten Transportband über mindestens einen Teigbandformer 3 mit Trichtervorrichtung und Walzenpaaren auf ein drittes Transportband überführt. Der Teigbandformer 3 bedingt die Bildung eines homogenen Teigbandes, welches auf dem dritten Transportband abgelegt wird. Das dritte Transportband ist Teil einer Laminieranlage bzw. Teigausrollanlage, die mit einer linear angeordneten Walze als erster Walzvorrichtung 4 versehen ist. Vor der Walzvorrichtung beträgt die Dicke des auf das dritte Transportband abgelegten Teigbandes z. B. 40 mm. Die erste Walzvorrichtung 4 kann z. B. aus einem Abwalzwerk oder Multiwalzensystems bestehen, das mit oben- und untenliegender motorisch betriebener Walze ausgestattet ist, und ermöglicht ein Walzen des Teigbandes auf eine Teigstärke bzw. Teigdicke von 30 mm und weniger in Abhängigkeit des gewünschten Backproduktes. So liegt die Teigstärke des Teigbandes nach Verlassen der ersten Walzvorrichtung 4 im Falle der Herstellung von Toastbrot bei 6 mm, von Milchbrötchen bei 4 mm und Ciabattabrötchen von 10 mm.

Nach Verlassen der ersten Walzvorrichtung 4 des Teigbandes auf ein viertes Transportband erfolgt ein weiterer Entspannungsschritt. Dem Entspannungsschritt auf dem vierten Transportband des gewalzten Teigbandes schließt sich ein Falten des entspannten Teigbandes entweder in Laufrichtung oder vertikal zur Laufrichtung an. Die Art des Faltvorganges wird wiederum von der Art der gewünschten Backware bestimmt. So kann der gewalzte Teig auf ein vertikal zum vierten Transportband angeordnetes fünftes Transportband aufgebracht werden und wird beim Übergang vom vierten Transportband zum fünften Transportband rechtwinklig mehrschichtig abgelegt oder laminiert. Hierdurch wird die Stabilität der Teigstruktur erhöht. Die Teigstärke wird um das 10- 30fache erhöht.

In einer anderen Variante wird der Teig in Laufrichtung des Laufbandes eingefaltet, d. h. seitlich von rechts oder links um 180 ° zur Mittelachse, wodurch sich die Teigbandstärke um das 10- bis 30fache erhöht.

Das gefaltete Teigband unterliegt einem weiteren Scher- bzw. Walzprozess in einer zweiten Walzvorrichtung 5, die aus einem Mehrwalzensystem und Schlichtwerk besteht. In der zweiten Walzvorrichtung 5 erfolgt eine Scherung bzw. Walzung des gefalteten Teigbandes auf eine Teigstärke von 2 mm und darüber, wiederum in Abhängigkeit vom gewünschten Backprodukt. So liegt die Teigstärke nach Verlassen der zweiten Walzvorrichtung 5 für ein Toastbrot bei 3 mm, für ein Milchbrötchen bei 2 mm und Ciabattabrötchen bei 5 mm.

Nach Verlassen der zweiten Walzvorrichtung 5 und Ablegen des gewalzten Teigbandes auf einem weiteren Transportband erfolgt ein Schneiden des Teigbandes in Längs- und Querrichtung unter Verwendung von mindestens einer Schneidvorrichtung 6 in eine vorbestimmte Anzahl von Teiglingen, die abhängig ist von der gewünschten Backware.

So wird im Falle eines Toastbrotes das Teigband zuerst in Längsrichtung (d. h. in Laufrichtung des Teigbandes) in drei parallel laufende Teigbänder geschnitten und anschließend die drei Teigbänder in Querrichtung geschnitten und rechtwinklig zur Laufrichtung aufgerollt. Die so erhaltenen Teiglinge unterliegen einem weiteren Schneidschritt in vier gleichgroße Teigstücke, die um 90 ° in Laufrichtung gedreht werden und auf ein quadratisches Backblech (1000 x 1000 mm oder 1100 x 1100 mm) abgesetzt werden. Ein Backblech fasst 24 Toastbrote.

Sollen Milchbrötchen erhalten werden, wird das Teigband zuerst in Längsrichtung (d. h. Laufrichtung des Teigbandes) in mehrere (3 bis 10, bevorzugt 5 bis 7) parallel laufende Teigbänder geschnitten und die längsgeschnittenen Teigbänder anschließend in Querrichtung geschnitten. Die so erhaltenen Teiglinge werden wiederum rechtwinklig zur Laufrichtung aufgerollt und auf ein quadratisches Backblech (z.B. 1000 x 1000 mm oder 1100 x 1100 mm) abgesetzt. Ein Backblech kann z.B. 84 Milchbrötchen umfassen.

Auch im Falle von Ciabattabrötchen erfolgt zunächst ein Schneiden des Teigbandes in Längsrichtung (Laufrichtung des Teigbandes) in mehrere parallel laufende Teigbänder, die anschließend in Querrichtung geschnitten werden. Die so erhaltenen Teiglinge werden wiederum rechtwinklig zur Laufrichtung aufgerollt und auf ein Backblech (1000 x 1000 mm) abgesetzt. Ein Backblech kann z.B. 70 Ciabattabrötchen umfassen.

Nach Schneiden und Ablegen der Teiglinge in den entsprechenden Backformen erfolgt der Gärungsprozess in den Backformen bei variierenden Gärtemperaturen, die in Abhängigkeit der gewünschten Backware gewählt werden. Nach dem Gärungsprozess können die Backformen unter Verwendung eines ersten Roboters 7 mit entsprechenden Deckeln abgedeckt werden. Die abgedeckten Backformen werden dem Backofen zugeführt und für einen vorbestimmten Zeitraum, der abhängig ist von der gewünschten Backware, gebacken. Toast- und Sandwichbrote werden bevorzugt vor dem Backprozess gedeckelt. Wie Kleingebäck können sie aber auch ohne Deckel gebacken werden.

Nach dem Backprozess erfolgt eine Entdeckelung der Backformen mit mindestens einem zweiten Roboter 8 und die Entnahme der Backwaren mit einem dritten Roboter 9.

Nach Entnahme der Backwaren mit dem mindestens einen dritten Roboter 9 werden die Backformen unter Verwendung eines Wasserstrahls 10 und Wasserverdampfung gekühlt. Die Wassermenge für die Formenkühlung wird nach dem Formengewicht und der erforderlichen Temperaturdifferenz berechnet.

Die Backwaren werden gekühlt und anschließend verpackt.

In der folgenden Tabelle sind die Parameter für Verfahren zur Herstellung von Toastbrot, Milchbrötchen und Ciabattabrötchen zusammenfassend dargestellt.

| **Parameter** | **Toastbrot** | **Milchbrötchen** | **Chiabatta-Brötchen** |
|---|---|---|---|
| Teigtemperatur Kneter 1 | 24°C | 26°C | 29°C |
| Teigtemperatur Kneter 2 | 27°C | 29°C | 30°C |
| Leistung 1. Kneter | 50Hz | 50Hz | 40Hz |
| Leistung 2. Kneter | 40Hz | 35Hz | 40Hz |
| Spaltbreite Schlichtwerk 1 | 6mm | 4mm | 10mm |
| Spaltbreite Schlichtwerk 2 | 3mm | 2mm | 5mm |
| Gärtemperatur | 34°C | 32°C | 32°C |
| Gärzeit | 57min | 115min | 45min |
| Relative Luftfeuchte (Gärung) | 85% | 80% | 88% |
| Backzeit | 25min | 10min | 12min |
| Ofentemperatur | 200°C-190°C | 220°C-180°C | 240°C-200°C |
| Vertikale Konvektion von unten | Gesamte Backzeit | Ohne vertikale Konvektion | 30% zu Beginn der Backzeit |
| Horizontale Konvektion auf die Gebäckoberfläche | Ohne Konvektion | Zu Beginn der Backzeit | 60% zu Beginn der Backzeit |
| Formenkühlung durch Wasserverdampfung | 212g Wasser pro Form | 372g Wasser pro Form | 159g Wasser pro Form |
| Formenmaße | 1070 X 1070mm | 1070 X 1070mm | 1070 X 1070mm |
| Produkte pro Form | 24 | 98 | 70 |

## Patentansprüche

1. Multivariables Verfahren zur kontinuierlichen Herstellung von Weizengroßgebäck und Weizenkleingebäck in einer einzigen Fertigungslinie umfassend die Schritte:
a) Herstellen der ersten Teigphase aus teigbildenden Rohstoffen bei einer Temperatur zwischen 20 und 30°C in mindestens einer ersten kontinuierlichen Knetvorrichtung (1), bevorzugt in einer Schnecke,
b) Auftragen der ersten Teigphase aus der ersten Knetvorrichtung (1) auf ein erstes Transportband zur Entspannung des Teiges,
c) Eintragen der entspannten ersten Teigphase in mindestens eine zweite kontinuierliche Knetvorrichtung (2), bevorzugt in eine Schnecke, und Herstellen einer zweiten Teigphase unter Zuführung von teigbelastenden Rohstoffen, , bei einer Temperatur zwischen 25 und 35°C,
d) Aufbringen der zweiten Teigphase aus der zweiten Knetvorrichtung (2) auf ein zweites Transportband,
e) Überführen des Teiges von dem zweiten Transportband über mindestens einen Teigbandformer (3) unter Ausbildung eines Teigbandes auf ein drittes Transportband mit mindestens einer ersten Walzvorrichtung (4), wobei das Teigband in der mindestens einen ersten Walzvorrichtung (4) auf eine Dicke von 3 bis 50 mm geschert wird, und Überführen des gewalzten Teigbandes auf ein viertes Transportband zum Entspannen,
f) Falten des gewalzten entspannten Teigbandes;
g) Einführen des gefalteten Teigbandes in mindestens eine zweite Walzvorrichtung (5), wobei das gefaltete Teigband in der mindestens einen zweiten Walzvorrichtug (5) auf eine Teigbandstärke von 2 bis 20 mm geschert wird;
h) Schneiden des Teigbandes in eine vorbestimmte Anzahl von Teiglingen,
i) Bestücken von quadratischen Backformen oder quadratischen Backblechen mit vorgegebenen konstanten Abmessungen mit den Teiglingen,
j) Gärung der Teiglinge in den offenen Backformen,
k) optional automatisiertes Abdecken der mit den gegärten Teiglingen bestückten Backformen,
l) Backen der Teiglinge in den Backformen, wobei der zum Backen verwendete Backofen über mehrere Backzonen mit mindestens vier Wärmeübertragungsvarianten, insbesondere Leitung, Konvektion, Strahlung und Kondensation, verfügt und mit unterschiedlichen Auslastungsgraden betrieben wird;
m) optional automatisiertes Entfernen der Abdeckung der Backformen,
n) automatisierte Entnahme der gebackenen Backware aus der Backform und Kühlen der Backware, und
o) Kühlen der Backformen nach Entnahme der gebackenen Backware, insbesondere unter Verwendung eines Wasserstrahls.

2. Verfahren nach Anspruch 1, **dadurch gekennzeichnet, dass** als teigbildende Rohstoffe für die erste Teigphase Wasser, Sauerteig und/oder Weizenmehl, und als teigbelastende Rohstoffe für die zweite Teigphase Fette und Zuckerstoffe verwendet werden.

3. Verfahren nach Anspruch 1, **dadurch gekennzeichnet, dass** das entspannte Teigband zum Falten auf ein rechtwinklig zum vierten Transportband angeordnetes fünftes Transportband in Laufrichtung des fünften Transportbandes quergefaltet wird.

4. Verfahren nach Anspruch 1, **dadurch gekennzeichnet, dass** das entspannte Teigband von dem vierten Transportband auf ein fünftes Transportband aufgebracht wird, wobei das Teigband parallel zur Laufrichtung des Transportbandes entlang der Längsachse des Teigbandes gefaltet wird.

5. Verfahren nach einem der vorhergehenden Ansprüche, **dadurch gekennzeichnet, dass** das gefaltete Teigband in der mindestens einen zweiten Walzvorrichtung (5) auf eine abschließende Teigstärke von 2 bis 10 mm gewalzt wird.

6. Verfahren nach einem der vorhergehenden Ansprüche, **dadurch gekennzeichnet, dass** das Teigband nach Falten und erneutem Walzen in Längs- und Querrichtung unter Verwendung von mindestens einer Schneidvorrichtung (6) in eine vorbestimmte Anzahl von Teiglingen geschnitten wird.

7. Verfahren nach einem der vorhergehenden Ansprüche, **dadurch gekennzeichnet, dass** die geschnittenen Teiglinge in Laufrichtung zu ihrer Querachse eingerollt werden und die eingerollten Teiglinge in die vorbestimmte Form gebracht werden.

8. Verfahren nach einem der vorhergehenden Ansprüche, **dadurch gekennzeichnet, dass** die Gärtemperatur zwischen 30 und 35°C, bevorzugt zwischen 32 und 34°C und die Gärzeit zwischen 30 und 120 min, bevorzugt 45 und 115 min, insbesondere bevorzugt zwischen 50 und 100 min beträgt.

9. Verfahren nach einem der vorhergehenden Ansprüche, **dadurch gekennzeichnet, dass** das automatisierte Abdecken der mit den gegärten Teiglingen bestückten Backformen unter Verwendung von mindestens einem Roboter (7) erfolgt.

10. Verfahren nach einem der vorhergehenden Ansprüche, **dadurch gekennzeichnet, dass** die Teiglinge in den Backformen bei Temperaturen zwischen 150 und 250°C, bevorzugt 180 und 240°C, insbesondere bevorzugt zwischen 200 und 220°C gebacken werden.

11. Verfahren nach einem der vorhergehenden Ansprüche, **dadurch gekennzeichnet, dass** die Backzeit zwischen 5 und 35 min, bevorzugt zwischen 6 und 30 min, insbesondere bevorzugt zwischen 8 und 28 min, ganz insbesondere bevorzugt zwischen 10 und 26 min in Abhängigkeit der Zusammensetzung des zu backenden Teiges beträgt.

12. Verfahren nach einem der vorhergehenden Ansprüche, **dadurch gekennzeichnet, dass** der Energieeintrag in den Backofen mittels Konvektion durch wahlweises Zuschalten von vertikalen und horizontalen Turbulenzen produktspezifisch exakt geregelt wird.

13. Verfahren nach einem der vorhergehenden Ansprüche, **dadurch gekennzeichnet, dass** das automatisierte Entfernen der Abdecken der abgedeckten Backformen und die automatisierte Entnahme der gebackenen Backware aus der Backform mittels jeweils eines Roboters (7, 8) erfolgt.

14. Verfahren nach einem der vorhergehenden Ansprüche, **dadurch gekennzeichnet, dass** die Kühlung der Backformen nach Entnahme der gebackenen Backware unter Verwendung eines Wasserstrahles auf Temperaturen zwischen 20 und 30°, bevorzugt 25 und 30°C erfolgt.

15. Vorrichtung zur Durchführung eines Verfahrens nach einem der vorhergehenden Ansprüche umfassend
- mindestens eine erste Knetvorrichtung (1) und mindestens eine zweite Knetvorrichtung (2), die über ein erstes Transportband miteinander verbunden sind,
- mindestens ein zweites Transportband zum Überführen des aus der zweiten Knetvorrichtung (2) austretenden Teiges in mindestens eine Trichtervorrichtung (3) als Teigbandformer auf mindestens ein drittes Transportband,
- mindestens eine an dem dritten Transportband vorgesehene erste Walzvorrichtung (4),
- mindestens ein viertes Transportband zum Überführen des in der ersten Walzvorrichtung (4) gewalzten Teigbandes auf mindestens ein fünftes Transportband, wobei das gewalzte Teigband gefaltet wird;
- mindestens eine zweite Walzvorrichtung (5) zum Walzen des auf dem fünften Transportband vorliegenden gefalteten Teigbandes
- mindestens eine Schneidvorrichtung (6) zum Schneiden des Teigbandes in eine vorbestimmte Anzahl von Teiglingen,
- mindestens eine Vorrichtung zum Bestücken der quadratischen Backformen oder Backbleche mit den geschnittenen Teiglingen,
- mindestens einen ersten Roboter (7) zum Abdecken der mit den gegärten Teiglingen bestückten Backformen,
- mindestens einen Backofen zum Backen der Teiglinge in den Backformen, wobei der Backofen über mehrere Backzonen mit mindestens vier Wärmeübertragungsvarianten, insbesondere Leitung, Konvektion, Strahlung und Kondensation, verfügt und mit unterschiedlichen Auslastungsgraden betrieben wird;-mindestens einen zweiten Roboter (8) zum Entfernen der Abdeckung der Backformen,
- mindestens einen dritten Roboter (9) zur Entnahme der Backwaren aus den Backformen,
- mindestens eine erste Kühlvorrichtung (10) in Form eines Wasserstrahls zum Kühlen der Backformen nach Entnahme der gebackenen Backware, und
- mindestens eine zweite Kühlvorrichtung zum Kühlen der Backwaren.

## Claims

1. Multivariable method for the continuous production of large wheat bakery items and small wheat bakery items in a single production line, comprising the following steps:
a) producing the first dough phase from dough-forming raw materials at a temperature between 20 and 30°C in at least one first continuous kneading device (1), preferably in a worm;
b) applying the first dough phase from the first kneading device (1) onto a first transportation belt, in order to relax the dough;
c) introducing the relaxed first dough phase into at least one second continuous kneading device (2), preferably in a worm, and producing a second dough phase with the feeding in of dough-stressing raw materials at a temperature between 25 and 35°C;
d) applying the second dough phase from the second kneading device (2) onto a second transportation belt;
e) transferring the dough from the second transportation belt by way of at least one dough sheeter (3), so as to form dough sheet, to a third transportation belt having at least one first rolling device (4), wherein the dough sheet in the at least one first rolling device (4) is sheared to a thickness of 3 to 50 mm, and transferring the rolled dough sheet onto a fourth transportation belt for relaxation;
f) folding the rolled relaxed dough sheet;
g) introducing the folded dough sheet into at least one second rolling device (5), wherein the folded dough sheet in the at least one second rolling device (5) is sheared to a dought sheet thickness of 2 to 20mm;
h) cutting the dough sheet into a predetermined number of dough portions;
i) filling square baking moulds or square baking trays having predefined constant dimensions with the dough portions;
j) fermenting the dough portions in the open baking moulds;
k) optionally automated covering of the baking moulds that are filled with the fermented dough portions;
l) baking the dough portions in the baking moulds wherein the baking oven that is used for baking disposes of a plurality of baking zones having at least four heat-transfer variants, in particular conduction, convection, radiation, and condensation, and is operated at dissimilar load levels;
m) optionally automated removal of the cover from the baking moulds;
n) automated retrieval of the baked bakery product from the baking mould, and cooling of the bakery product; and
o) cooling the baking moulds after retrieval of the baked bakery product, in particular using a water jet.

2. Method according to Claim 1, **characterized in that** water, sourdough and/or wheat flour are used as the dough-forming raw materials for the first dough phase, and fats and sugars are used as the dough-stressing raw materials for the second dough phase.

3. Method according to Claim 1, **characterized in that** the relaxed dough sheet, in order to be folded, is folded onto a fifth transportation belt, in a manner transverse to the running direction of the fifth transportation belt, that is disposed perpendicularly to the fourth transportation belt.

4. Method according to Claim 1, **characterized in that** the relaxed dough sheet is applied onto a fifth transportation belt from the fourth transportation belt, wherein the dough sheet is folded in a manner parallel with the running direction of the transportation belt, along the longitudinal axis of the dough sheet.

5. Method according to one of the preceding claims, **characterized in that** the folded dough sheet is rolled in the at least one second rolling device (5) to a final dough thickness of 2 to 10 mm.

6. Method according to one of the preceding claims, **characterized in that** the dough sheet, after folding and renewed rolling, is cut in the longitudinal direction and in the transverse direction into a predetermined number of dough portions by using at least one cutting device (6).

7. Method according to one of the preceding claims, **characterized in that** the cut dough portions are rolled up in the running direction, to the transverse axis of said dough portions, and the rolled-up dough portions are moulded to the predetermined shape.

8. Method according to one of the preceding claims, **characterized in that** the fermentation temperature is between 30 and 35°C, preferably between 32 and 34°C, and the fermentation time is between 30 and 120 min, preferably 45 and 115 min, particularly preferably between 50 and 100 min.

9. Method according to one of the preceding claims, **characterized in that** the automated covering of the baking moulds that are filled with the fermented dough portions is performed using at least one robot (7).

10. Method according to one of the preceding claims, **characterized in that** the dough portions are baked in the baking moulds at temperatures between 150 and 250°C, preferably 180 and 240°C, particularly preferably between 200 and 220°C.

11. Method according to one of the preceding claims, **characterized in that** the baking time is between 5 and 35 min, preferably between 6 and 30 min, particularly preferably between 8 and 28 min, very particularly preferably between 10 and 26 min, depending on the composition of the dough to be baked.

12. Method according to one of the preceding claims, **characterized in that** the input of energy into the baking oven is precisely regulated in a product-secific manner by means of convection by selectively switching on vertical and horizontal turbulences.

13. Method according to one of the preceding claims, **characterized in that** the automated removal of the covers from the covered baking moulds, and the automated retrieval of the baked bakery product from the baking mould are performed in each case by means of a robot (7, 8).

14. Method according to one of the preceding claims, **characterized in that** the cooling of the baking moulds after retrieval of the baked bakery product is performed using a water jet at temperatures between 20 and 30°, preferably 25 and 30°C.

15. Device for carrying out a method according to one of the preceding claims, the device comprising:
- at least one first kneading device (1), and at least one second kneading device (2), which are interconnected by way of a first transportation belt;
- at least one second transportation belt for transferring the dough sheet that exits the second kneading device (2) into at least one funnel device (3) as dough sheeter and onto at least one third transportation belt;
- at least one first rolling device (4) which is provided on the third transportation belt;
- at least one fourth transportation belt for transferring the dough sheet that has been rolled in the first rolling device (4) onto at least one fifth transportation belt, wherein the rolled dough sheet is folded;
- at least one second rolling device (5) for rolling the folded dough sheet that is present on the fifth transportation belt;
- at least one cutting device (6) for cutting the dough sheet into a predetermined number of dough portions;
- at least one device for filling the square baking moulds or baking trays with the cut dough portions;
- at least one first robot (7) for covering the baking moulds that are filled with the fermented dough portions;
- at least one baking oven for baking the dough portions in the baking moulds, wherein the baking oven that is used for baking disposes of a plurality of baking zones having at least four heat-transfer variants, in particular conduction, convection, radiation, and condensation, and is operated at dissimilar load levels;
- at least one second robot (8) for removing the cover from the baking moulds;
- at least one third robot (9) for retrieving the bakery products from the baking moulds;
- at least one first cooling device (10) in the form of a water jet, for cooling the baking moulds after retrieval of the baked bakery product; and
- at least one second cooling device for cooling the bakery products.

## Revendications

1. Procédé multivariable de production continue de grands produits de biscuiterie à base de blé et de petits produits de biscuiterie à base de blé dans une chaîne de production unique, le procédé comprenant les étapes suivantes :
a) production de la première phase de pâte à partir de matières premières formant une pâte à une température comprise entre 20 et 30 °C dans au moins un premier dispositif de pétrissage continu (1), de préférence dans une vis sans fin,
b) application de la première phase de pâte provenant du premier dispositif de pétrissage (1) sur une première bande transporteuse pour détendre la pâte,
c) introduction de la première phase de pâte détendue dans au moins un deuxième dispositif de pétrissage continu (2), de préférence dans une vis sans fin, et production d'une deuxième phase de pâte avec apport de matières premières sollicitant la pâte, à une température comprise entre 25 et 35 °C,
d) application de la deuxième phase de pâte provenant deuxième dispositif de pétrissage (2) sur une deuxième bande transporteuse,
e) transfert de la pâte de la deuxième bande transporteuse, par le biais d'au moins un dispositif de formation de pâte (3) avec formation d'une bande de pâte, à une troisième bande transporteuse dotée d'au moins un premier dispositif à rouleaux (4), la bande de pâte étant cisaillée jusqu'à une épaisseur de 3 à 50 mm dans ledit au moins un dispositif à rouleaux (4), et transfert de la bande de pâte laminée sur une quatrième bande transporteuse pour qu'elle soit détendue,
f) pliage de la bande de pâte détendue laminée ;
g) introduction de la bande de pâte pliées dans au moins un deuxième dispositif à rouleaux (5), la bande de pâte pliée étant cisaillée jusqu'à une épaisseur de bande de pâte de 2 à 20 mm dans ledit au moins un dispositif à rouleaux (5) ;
h) découpe de la bande de pâte en un nombre prédéfini de pâtons,
i) garnissage de moules quadrangulaires ou de plaques de cuisson quadrangulaires de dimensions constantes prédéfinies avec les pâtons,
j) levage des pâtons dans les moules ouverts,
k) éventuellement recouvrement automatisé des moules garnis des pâtons levés,
l) cuisson des pâtons dans les moules, le four de cuisson utilisé pour la cuisson comportant plusieurs zones de cuisson présentant au moins quatre variantes de transfert de chaleur, en particulier la conduction, la convection, le rayonnement et la condensation, et fonctionnant à différents degrés d'utilisation ;
m) éventuellement retrait automatisé du couvercle des moules,
n) retrait automatisé des produits de boulangerie cuits du moule, et
o) refroidissement des moules après le retrait des produits de boulangerie cuits, en particulier en utilisant un jet d'eau.

2. Procédé selon la revendication 1, **caractérisé en ce que** l'on utilise, en tant que matières premières formant une pâte pour la première phase de pâte, de l'eau, du levain et/ou de la farine de blé et, en tant que matières premières sollicitant la pâte pour la deuxième phase de pâte, des matières grasses et des substances sucrées.

3. Procédé selon la revendication 1, **caractérisé en ce que** la bande de pâte détendue est, pour le pliage sur une cinquième bande transporteuse disposée perpendiculairement à la quatrième bande transporteuse, pliée transversalement dans la direction d'avance de la cinquième bande transporteuse.

4. Procédé selon la revendication 1, **caractérisé en ce que** la bande de pâte détendue est appliquée à partir de la quatrième bande transporteuse sur une cinquième bande transporteuse, la bande de pâte étant pliée parallèlement à la direction d'avance de la bande transporteuse le long de l'axe longitudinal de la bande de pâte.

5. Procédé selon l'une des revendications précédentes, **caractérisé en ce que** la bande de pâte pliée est laminée dans ledit au moins un deuxième dispositif à rouleaux (5) jusqu'à une épaisseur de pâte finale de 2 à 10 mm.

6. Procédé selon l'une des revendications précédentes, **caractérisé en ce que** la bande de pâte est, après avoir été pliée et laminée à nouveau, coupée dans la direction longitudinale et transversale en un nombre prédéfini de pâtons en utilisant au moins un dispositif de coupe (6).

7. Procédé selon l'une des revendications précédentes, **caractérisé en ce que** les pâtons coupés sont enroulés dans la direction d'avance par rapport à leur axe transversal et les pâtons enroulés sont formés à la forme prédéfinie.

8. Procédé selon l'une des revendications précédentes, **caractérisé en ce que** la température de levage est comprise entre 30 et 35 °C, de préférence entre 32 et 34 °C et le temps de levage est compris entre 30 et 120 min, de préférence entre 45 et 115 min, de manière particulièrement préférée entre 50 et 100 min.

9. Procédé selon l'une des revendications précédentes, **caractérisé en ce que** le recouvrement automatisé des moules garnis des pâtons levés s'effectue en utilisant au moins un robot (7).

10. Procédé selon l'une des revendications précédentes, **caractérisé en ce que** les pâtons sont cuits dans les moules à des températures comprises entre 150 et 250 °C, de préférence entre 180 et 240 °C, de manière particulièrement préférée entre 200 et 220 °C.

11. Procédé selon l'une des revendications précédentes, **caractérisé en ce que** le temps de cuisson est compris entre 5 et 35 min, de préférence entre 6 et 30 min, de manière particulièrement préférée entre 8 et 28 min, idéalement entre 10 et 26 min en fonction de la composition de la pâte à cuire.

12. Procédé selon l'une des revendications précédentes, **caractérisé en ce que** l'apport d'énergie dans le four de cuisson est régulé exactement de manière spécifique au produit par convection par activation sélective de turbulences verticales et horizontales.

13. Procédé selon l'une des revendications précédentes, **caractérisé en ce que** le retrait automatisé des couvercles des moules recouverts et le retrait automatisé des produits de boulangerie cuits hors du moule s'effectuent respectivement au moyen d'un robot (7, 8).

14. Procédé selon l'une des revendications précédentes, **caractérisé en ce que** le refroidissement des moules après le retrait des produits de boulangerie cuits s'effectue en utilisant un jet d'eau à des températures comprises entre 20 et 30 °, de préférence entre 25 et 30 °C.

15. Dispositif permettant de mettre en oeuvre un procédé selon l'une des revendications précédentes, comportant
- au moins un premier dispositif de pétrissage (1) et au moins un deuxième dispositif de pétrissage (2) qui sont reliés l'un à l'autre par le biais d'une première bande transporteuse,
- au moins une deuxième bande transporteuse pour le transfert de la pâte sortant du deuxième dispositif de pétrissage (2) dans au moins un dispositif entonnoir (3) en tant que dispositif de formation de pâte sur au moins une troisième bande transporteuse,
- au moins un premier dispositif à rouleaux (4) prévu sur la troisième bande transporteuse,
- au moins une quatrième bande transporteuse pour le transfert de la bande de pâte laminée dans le premier dispositif à rouleaux (4) à au moins une cinquième bande transporteuse, la bande de pâte laminée étant pliée ;
- au moins un deuxième dispositif à rouleaux (5) pour le laminage de la bande de pâte pliée présente sur la cinquième bande transporteuse
- au moins un dispositif de coupe (6) pour la découpe de la bande de pâte en un nombre prédéfini de pâtons,
- au moins un dispositif de garnissage des moules ou plaques de cuisson quadrangulaires avec les pâtons coupés,
- au moins un premier robot (7) pour le recouvrement des moules garnis des pâtons levés,
- au moins un four de cuisson pour la cuisson des pâtons dans les moules, le four de cuisson comportant plusieurs zones de cuisson présentant au moins quatre variantes de transfert de chaleur, en particulier la conduction, la convection, le rayonnement et la condensation, et fonctionnant à différents degrés d'utilisation ;
- au moins un deuxième robot (8) pour le retrait du couvercle des moules,
- au moins un troisième robot (9) pour le retrait des produits de boulangerie hors des moules,
- au moins un premier dispositif de refroidissement (10) sous la forme d'un jet d'eau pour le refroidissement des moules après le retrait des produits de boulangerie cuits, et
- au moins un deuxième dispositif de refroidissement pour le refroidissement des produits de boulangerie.
